Europäisches Patentamt

European Patent Office

Office européen des brevets

(11) Publication number: 0 498 369 A2

# EUROPEAN PATENT APPLICATION

(21) Application number: 92101825.5

(22) Date of filing: 04.02.92

(51) Int. Cl.5: H04B 3/23

(30) Priority: 04.02.91 US 650470

(43) Date of publication of application:
12.08.92 Bulletin 92/33

(84) Designated Contracting States:
DE FR GB

(71) Applicant: TELEBIT CORPORATION
1315 Chesapeake Terrace
Sunnyvale, CA 94089(US)

(72) Inventor: Cioffi, John M.
7879 Creekline
Cupertino, CA 95014(US)
Inventor: Bingham, John A.C.
2353 Webster Street
Palo Alto, CA 94301(US)

(74) Representative: DIEHL GLAESER HILTL &
PARTNER
Flüggenstrasse 13
W-8000 München 19(DE)

(54) Method and apparatus for echo cancellation of a multicarrier signal.

(57) When the transmitter and receiver of a duplex multicarrier modem are connected to a two-wire line, echoes of the transmitted signal are reflected back into the receiver by mismatches between the output impedance of the modem and the input impedance of the line. These echoes are cancelled by an echo emulator which operates on samples of the transmitted signal. The parameters of the emulator are adapted by correlating, in the frequency domain, the transmitted data with the received signal. A specialiyed phase-locked loop, which uses a unique phase detector, tracks both frequency offset and phase of the far echo seperately from the adaptation of the emulator parameters. Initial training of the canceller is performed with a simple cyclic training signal that allows the use of efficient fast transforms.

FIGURE 3

The present invention pertains to the transmission and reception of a multicarrier data signal, and more particularly, to the cancellation of the echoes of a transmitted signal that are superimposed on a received signal when both transmitter and receiver are connected to a bi-directional two-wire line.

## BACKGROUND OF THE INVENTION

### Duplex Transmission and Echo Removal:

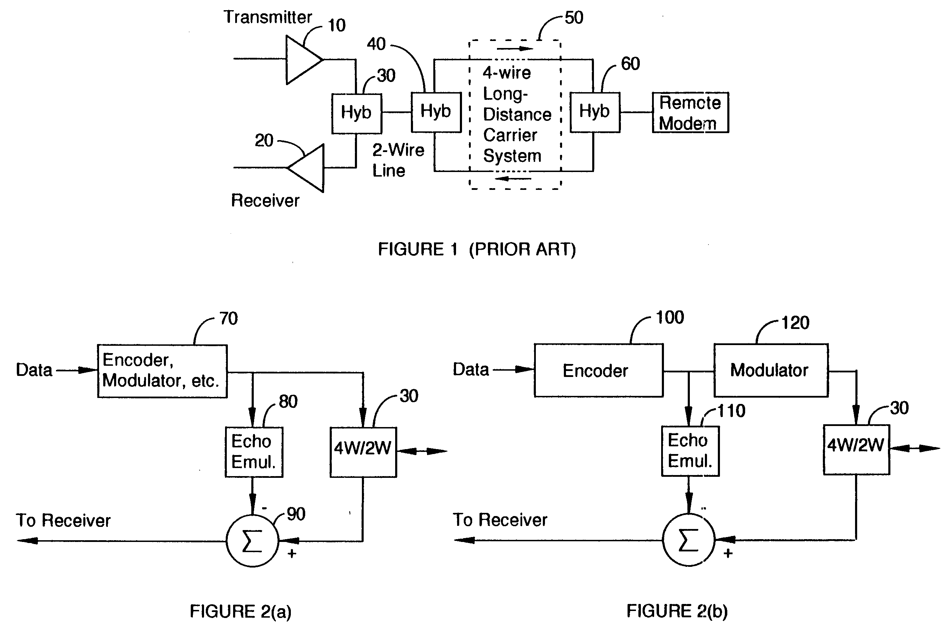

Many data communication systems require the simultaneous transmission and reception of data; this is called duplex transmission. In order to make the most efficient use of transmission equipment, it is often desirable that this duplex transmission be carried by a single bi- directional two-wire line. When, as is shown in Fig. 1, a transmitter **10** and a receiver **20** are connected to the same end of such a two-wire line--usually through a four-wire to two-wire connector or "hybrid" **30**--a distorted version of the transmitted signal (an echo) is reflected back into the receiver. If the other end of the two-wire line is connected, through a second hybrid **40**, to a four-wire long-distance carrier system **50**, then there may be another echo reflected by a third hybrid **60** at the far end of the four-wire line. These two echoes are called near-end and far-end echoes respectively; they would interfere with the detection of the signal from the far-end transmitter unless somehow removed.

Early duplex modems such as those defined in the CCITT Recommendations V.22 and V.22 bis used separate frequency bands for the transmit and receive signals, and removed the echo(es) by filtering; this is called frequency division multiplexing, or FDM. More recent modems such as those defined in V.32 and V.32 bis, however, achieve more than double the data rate on a given line by using the full frequency band for the signals in both directions and removing the echo(es) by cancellation.

The input impedances of the near-end and far-end two-wire lines to which a modem and a carrier system may be connected vary widely from line to line; furthermore, the impedance of a given line may also vary slightly with time. Therefore the characteristics of the echo(es) reflected back to the receiver vary widely, and the echo canceller must be adaptive; that is, upon initiation of a data connection it must learn the characteristics of the echo(es), and then track any small changes thereafter.

### Modulation Methods:

The modulation method that has been most widely used for the transmission of high-speed data is Quadrature Amplitude Modulation or QAM (see, for example, J.A.C. Bingham, The Theory and Practice of Modem Design, John Wiley, 1988). This uses a single carrier at a frequency near the center of the usable frequency band; to distinguish it from the alternative method that will be described next, it will be referred to herein as single-carrier QAM (SCQAM).

An alternative, and very efficient, method of transmitting high- speed data was described by Baran in U.S. Patent No. 4,438,511 "Packetized Ensemble Modem". The data to be transmitted are divided into blocks, and each block is further divided into sub-blocks of, typically, from one to eight bits. The bits in each sub-block are used to modulate one of a set of carrier signals, which are evenly spaced across the usable frequency band. All the modulated carriers are then added together, and the composite signal is transmitted as a "multicarrier" signal.

### PRIOR ART

### Echo Cancellers:

Echo cancellers (ECs) for SCQAM may be either signal-driven or data-driven, and may operate at either the symbol rate of the transmitted data or the Nyquist rate of the channel. All combinations of these options have been described in the literature, and several patents have been granted (see, for example, S.B. Weinstein, U.S. Patent No. 4,131,767 and K.Mueller, U.S. Patent No. 4,087,654).

Most of the early ECs were signal-driven as shown in Figure 2(a); the transmit signal from the Encoder/Modulator **70** is input to the hybrid **30** and also--usually in the form of digitized samples at the Nyquist rate--to an Echo Emulator **80** in the form of a Finite Impulse Response (FIR) filter (also known as a Tapped Delay Line, or TDL). The output of the emulator is then subtracted **90** from the output of the hybrid (comprising both the far-end signal and the echo of the local transmitter), and the difference is passed to the receiver. This difference is also correlated with the samples of the transmit signal stored in the emulator, and the products are used to update the parameters (tap values) of the emulator; this is known as Least Mean Squares (LMS) adaptation, and it should converge to a state where the echo component of the received signal is almost completely cancelled. The main disadvantage of this method is that the spectral characteristics of the (necessarily) over-sampled transmit signal are such that adaptation of the tap values is very slow, and poorly conditioned numerically; this is known as the eigenvalue-spread problem, and it is often encountered in LMS adaptation.

More recent ECs for SCQAM have been data-driven as shown in Fig. 2(b); the baseband data is encoded **100**, and input to the Echo Emulator **110**, which emulates both modulator and echo path. Because the data are scrambled (i.e., uncorrelated with each other) there is no spread of eigenvalues, and adaptation is much better behaved. Furthermore, in order to simplify the synchronization of the receiver with the clock in the far transmitter, both the data and the output of the hybrid are sampled at the Nyquist rate of the channel.

Training:

Unless some special measures are taken (see, for example, D.D.Falconer, "Adaptive Reference Echo Cancellation", IEEE Trans. Commun., pp. 2083-2094, Sept. 1982), the signal from the far-end transmitter will act like noise as far as the training of the EC is concerned, and will seriously degrade and/or slow down the adaptation. Therefore, most ECs are trained in two stages. During the first, half- duplex, stage the far-end transmitter is silent, and the received signal comprises only the echo(es); in the second, full-duplex, stage the received signal comprises both echo(es) and far-end signal, and the step-size of the adaptation must be greatly reduced.

Training during the first stage is often done using a repetitive (i.e., cyclic) signal such as a chirp sequence (see D.C. Chu, "Polyphase Codes with Good Periodic Correlation Properties", IEEE Trans. Inf. Theory, pp. 531-532, July 1972). The echo is transformed into the frequency domain and its transform is divided by the known transform of the transmit signal. Ling and Long ("Correlation-Based Fast Training of Data-Driven Nyquist In-Band Echo Cancellers", IEEE Intl. Conf. on Commun., pp. 1280-1284, April 1990) proposed that the period of the sequence should depend upon the delay of the far echo; such a period would not, in general, consist of a number of samples that was an integer power of two, and therefore the transformations could not be performed by the efficient Fast Fourier Transform; the much less efficient Discrete Fourier Transforms (DFT) would have to be used.

Near and Far ECOs:

If the round-trip propagation delay through the four-wire part of a connection is longer than the duration of the near-end echo, then the near and far echoes will be separated by a quiet period. Most ECs are therefore implemented as two separate cancellers (NEC and FEC) separated by an adjustable bulk delay.

Because the far echo traverses one or more carrier systems it may have more impairments than the near echo; in particuar, it may be shifted slightly in frequency. The FEC must therefore be able to learn and track a small frequency offset between the transmitted signal and its far echo. Methods of doing this have been described by several authors (e.g., R.D. Gitlin and J.S. Thomson, "A Phase Adaptive Structure for Echo Cancellation", IEEE Trans. Commn., pp. 1211-1220, Aug. 1978).

**Multicarrier Modulation:**

Multicarrier modulation systems can be divided into two categories: (a) those that use filtering to achieve a degree of orthogonality between the signals in the sub-channels, and (b) those that modulate the carriers with unfiltered signals. Since the carriers in the first category are modulated and those in the second are keyed, these systems have been designated as MCQAM and MCQASK, respectively. The latter require much less computation because they can use very efficient Fast Fourier Transforms for modulation and demodulation; furthermore they can use many more (more closely spaced) carriers, and thereby achieve greater immunity to both channel distortion and impulse noise.

Echo cancellation of MCQAM signals has been discussed by N.H. Lewis et al in "An Efficient Data Driven Echo Canceller for Multicarrier Modulation Systems" (IEEE Trans. Commun., in review), but neither the amount of echo suppression nor the speed of adaptation reported were adequate for high-speed data transmission over a wide range of channels.

Echo cancellation of MCQASK signals has been discussed briefly by J.A.C. Bingham in "Multicarrier Modulation for Data Transmission: an Idea Whose Time Has Come" (IEEE Communications Magazine, May 1990). As pointed out there, the distortion in the echo path will cause the data modulated onto each carrier to produce echoes in many sub-bands besides its own; there will be both intra-channel and inter-channel echoes. Consequently, a straightforward implementation of a data-driven EC would require a prohibitive amount of computation. On the other hand, a conventional signal-driven canceller that operated on the composite multicarrier signal would suffer from the eigenvalue-spread problem.

**SUMMARY OF THE INVENTION:**

In order to overcome the aforementioned problems the invention provides an improved method and apparatus for echo cancellation of a multicarrier signal which method is evident from independent claims 1,8,9,10, and 11 and which apparatus is evident from independent claims 12,18,19,20, and 21. Further advantageous features, aspects, and details of the invention are evident from the dependent claims, the description and the drawings. The claims are intended to be understood as a first non-limiting approach of defining the invention in general terms.

The full process of echo cancellation can be conveniently considered as three separate operations: the emulation of the echo, subtraction from the output of the hybrid, and adaptation of the parameters of the emulator. These operations can be performed in the time domain or the frequency domain, and the emulation and adaptation can be performed on either the transmit data or the transmit signal.

One aspect of the present invention is to resolve the signal-driven/data-driven dilemna and thus avoid the problems associated with each approach. This is achieved by choosing the most appropriate domain and operand for each of the three operations.

The emulation is performed upon the transmit signal; this avoids the problems of multi-dimensional emulators that would be needed for multicarrier signals if the emulators were data driven. The emulation can be performed in either the time domain using convolution or in the frequency domain using overlap-save transforms, both techniques are well-known in the art.

The subtraction of the emulated echo must, however, be performed in the time domain. This preserves independence of the timing in transmitter and receiver, and also avoids the problems of the non-cyclic nature of the transmit signal.

The adaptation of the parameters of the emulator is performed in the frequency domain by correlation with the transmit data. This avoids the problems of eigenvalue spread, and makes the adaptation process very well conditioned numerically.

A second aspect is to do as much as possible of the signal processing in a block mode in the frequency domain (rather than sample by sample in the time domain) in order to take advantage of the computational efficiencies of the Fast Fourier Transform (FFT).

**BRIEF DESCRIPTIONS OF THE DRAWINGS**

Figure 1 shows the prior art connection of a transmitter and a receiver of a modem to a two-wire line, which is connected at its other end to a four-wire carrier system. This, in turn, is teminated by another two-wire line, which is terminated at its far end by the input impedance of the far modem.

Figure 2a shows a signal-driven echo canceller of the prior art.

Figure 2b shows a data-driven echo canceller of the prior art.

Figure 3 is a detailed depiction of one embodiment of the present invention for the cancellation of a near-end echo.

Figure 4 shows an alternative, prior art, embodiment of an echo emulator.

Figure 5 shows the preferred method of compensating for frequency offset in the far echo.

**DESCRIPTION OF THE PREFERRED EMBODIMENTS**

Before beginning to train the echo cancellers the delay, $T_d$, and the frequency-offset, $f_{off}$, of the far echo must be measured. Methods of measuring the delay and the offset have been described in CCITT Recommendation V.32 and by J. Cioffi ("A Fast Echo Canceller Initialization Method for the CCITT V.32 Modem", IEEE Trans. Commun., pp.629-638, May 1990), respectively.

After the delay has been measured and an initial estimate of any frequency-offset has been made there are three modes of operation for the canceller of the present invention:

(1) initial frequency-domain training using cyclic signals,

(2) adaptation of the canceller parameters in a half-duplex mode (that is, without double-talk), and

(3) continual slow adaptation of the parameters during double-talk.

In the first embodiment of the invention the only difference between operation in modes (2) and (3) is in

4

the adaptation step size; during double-talk it must be much smaller in order to filter out the part of the received signal that comes from the far-end transmitter, which, paradoxically, acts like noise for the echo canceller. Operation in modes (1) and (2) will be described in reverse order, as is common practice in the art.

**Generation of the Transmit Signal:**

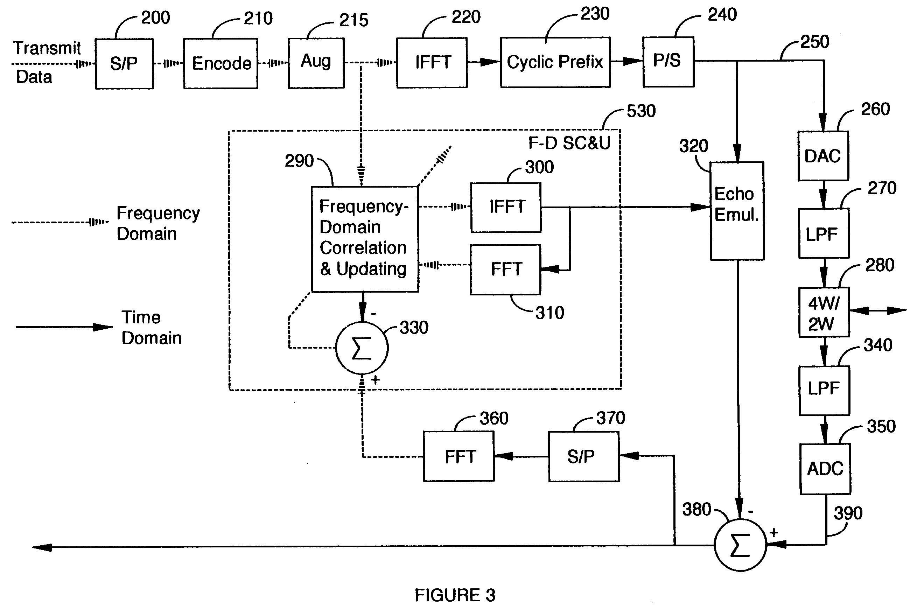

One method of calculating a block of samples of an MCQASK signal and transmitting them sequentially onto a line has been described by Keasler et al in U.S. Patent No.4,206,320 and by Baran in U.S. Patent No. 4,438,511. The steps are shown in blocks **200-230** of Fig. 3, and can be summarized as follows:

(1) the serial input data are assembled into blocks using a serial-to-parallel converter **200**, and each block is divided into $N_c$ sub-blocks as described by Hughes-Hartogs in U.S. Patent No. 4,679,227,

(2) each block and constituent sub-blocks are encoded **210**, and the binary data in each of the sub-blocks are converted into two-dimensional (i.e., complex), multi-valued signals, which are to be used to modulate the carriers,

(3) each set of $N_c$ complex, multi-valued signals (ignoring, for the moment, the Augmentation operation **215**) is then used to modulate $N_c$ carriers at frequencies evenly spaced from $n_1$ f to $n_2$ f, where $N_c = n_2 - n_1 + 1$. This modulation is effected by an Inverse FFT (IFFT) **220**, which converts the frequency-domain samples into a set of N real, time-domain samples. In the first implementation $\Delta f$ was 7.8125 ($= 8000/1024$) Hz, and N was 1024; $N_c$ varies with the transmission channel used, but is typically about 380.

(4) the last L samples of each block are also prefixed **230** to the front of that block in order to eliminate inter-symbol interference in the far-end receiver by providing a guard period during which the propagation transients of the line may decay, and

(5) the resultant (N+L) samples are converted, in parallel-to-serial converter **240**, into a sequence of signals **250**, which are passed to a digital-to-analog converter **260**, a low-pass filter **270**, a hybrid four-wire to two-wire connector **280**, and thence to the two-wire line.

Augmentation of the Transmit Signal for Improved Correlation:

For the most precise adaptation of the canceller it is desirable that the set of frequency-domain samples that is input to the correlator **290** and the IFFT **220** have a slightly wider bandwidth than just the $N_c$ carriers that are used for transmission of data. Therefore the set of $N_c$ complex, multi-valued samples may be augmented, in **290**, by a few fixed (i.e., not changing from block to block) samples, which will result in unmodulated carriers below $n_1$ f and above $n_2$ f. The total number of carriers used will be defined as $N_{tot}$.

**Emulation and Subtraction of the Echo:**

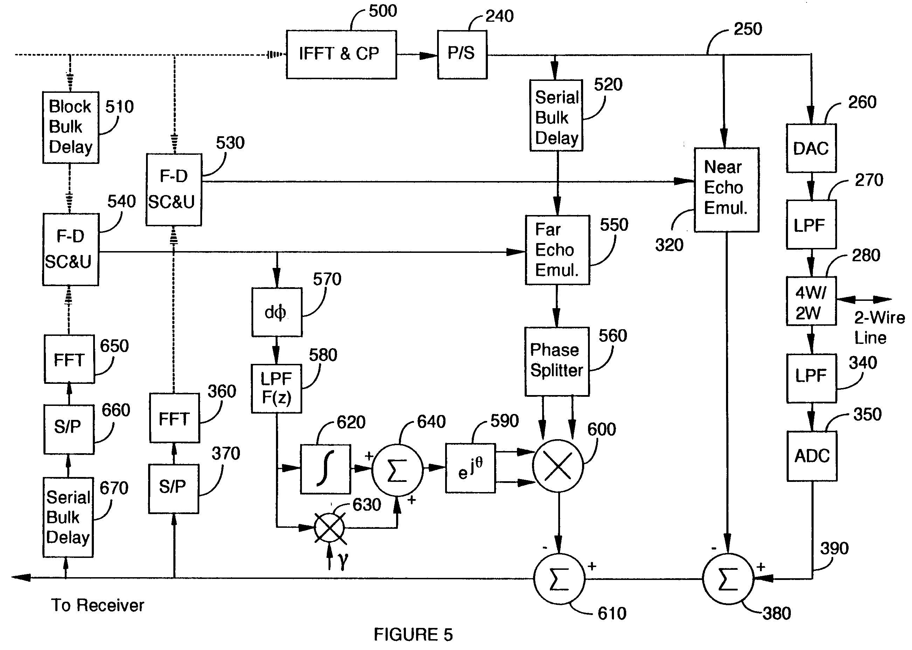

Fig. 5 shows the full implementation of the invention, with cancellation of both near and far echoes. For the sake of clarity in a first explanation, however, Fig. 3 shows only the cancellation of a near echo.

The signal received from the two-wire line, which is output from the hybrid **280**, is passed to an anti-aliassing low-pass filter **340**, and an analog-to-digital converter, ADC **350**. The digital samples of this signal **390** are then input to the plus terminal of subtractor **380**. During duplex data transmission and reception ("doubletalk") this signal is the sum of the signal from the far transmitter, the near echo, and, sometimes, a far echo. In order, however, to simplify the first explanation of the echo canceller it will be assumed that the far transmitter is silent, and that also there is no far echo.

The sequence of transmit signals **250** is input to near echo emulator **320**, and the output of this emulator is applied to the minus input of subtractor **380**. Thus, a near echo is cancelled by subtracting from the received signal a locally generated--that is, emulated--echo.

In one embodiment of the invention, the echo emulator **320** is implemented as a tapped delay line, which performs a conventional convolution in the time domain:

$$v_k = \sum_{m=1}^{M_1} u_{k-m+1} h_m \qquad (1)$$

where the $u_k$ and $v_k$ are the samples of the input to and output from the emulator, and the $h_m$ are the most recent estimates of the samples of the truncated impulse response of the echo path, which are derived from the output of the IFFT **300**.

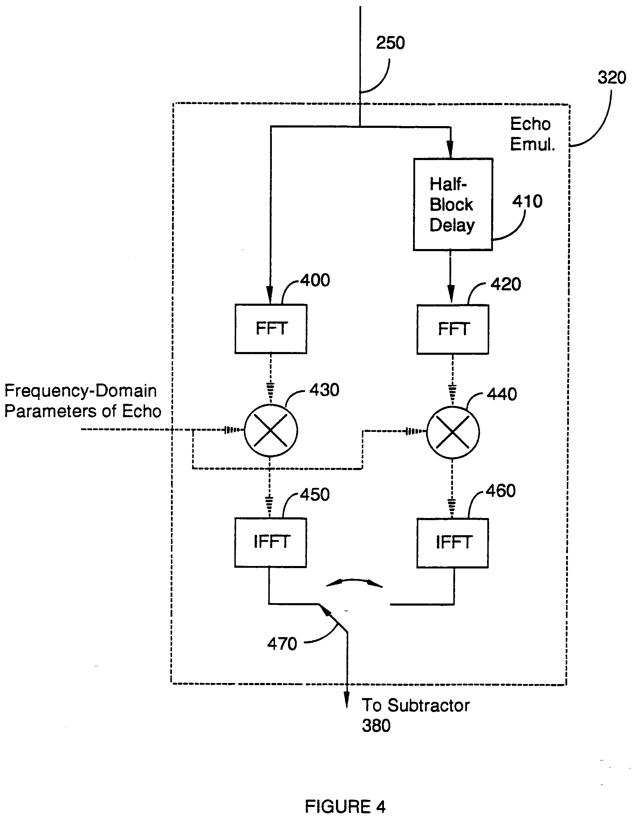

In an alternative embodiment of the present invention echo emulation may be performed in the frequency domain as shown in Fig. 4, where the Echo Emulation block **320** has been expanded to show the following operations.

(a) Samples of the transmit signal **250**, defined as $x_j$, are grouped into blocks $j = kN + 1$ to $(k+1)N$, and transformed by FFT **400**. They are also delayed by half a block (i.e., by N/2 samples) in **410**, and samples $j = (k+1/2)N + 1$ to $(k+3/2)N$ are transformed by FFT **420**.

(b) The two frequency-domain transforms of the transmit signal are each multiplied in **430** and **440**, sub-channel by sub-channel, by the frequency-domain parameters of the echo,

(c) The two sets of products are transformed back into the time domain by IFFTs **450** and **460**, and

(d) Because of the non-cyclic nature of the transmit samples and the duration of the echo impulse response, each of the sequences of time samples output by **450** and **460** is valid during only part of the time. Therefore switch **470**, in the position shown, selects the output of **450** for $j = (k+1/4)N + 1$ to $(k+3/4)N$; it then switches to the other position and selects the output of **460** for $j = (k-1/4)N + 1$ to $(k+1/4)N$.

## Adaptation of the Parameters of the Echo Emulator:

The samples of the modified received signal (received signal minus emulated echo) are grouped into blocks by the Serial-to-Parallel converter **370** and then input to the FFT operation **360**, and transformed into $N_{tot}$ complex, frequency-domain samples, $Y'_n$. These and the frequency-domain samples of the transmit signal $X_n$, are input to an LMS algorithm, comprising Subtraction **330**, Correlation and Updating **290**, IFFT **300** and FFT **310**, which stores and updates the estimates $\underline{H}_n$ ($n = 1$ to $N_{tot}$) of the frequency-domain parameters of the echo path. A set of $N_{tot}$ error samples, $E_n$, is calculated by

$$E_n = Y'_n - \underline{H}_n X_n \qquad (2)$$

and a set of temporary, updated estimates of the $\underline{H}_n$ are calcuated according to

$$\underline{H}'_n = \underline{H}_n - \delta E_n X^*_n \qquad (3)$$

where the * denotes the complex conjugate, and $\delta$ is a small step size chosen, as is well known in the art, for the best compromise between noise averaging and speed of adaptation of the estimates.

These temporary estimates $\underline{H}'_n$ are then transformed into the time domain by the IFFT **300**, and all but the first $M_1$ time samples are set to zero. The new, truncated set of $h_m$ for $m = 1$ to $M_1$ is then input to the echo emulator for use with the next block of transmit signals. The truncated set is also retransformed back into the frequency domain by FFT **310** in order to generate a new, smoothed set of estimates $\underline{H}_n$.

## Cancellation of Far-End Echoes:

The method of cancelling far echoes is the same as that for near echoes except for the addition of three bulk delays--two serial and one block--and an algorithm to compensate for frequency offset; these features are shown in Fig. 5, where several of the individual operation blocks of Fig. 3 have been combined into composite blocks (e.g., **290**, **300**, **310** and **330** are shown as F-D SC&U **530**).

Because of the propagation delay in the four-wire path (the main component of the round-trip delay $T_d$) shown in Fig. 1, there may be a significant period of time between the transmission of a signal and the return of a far echo to the receiver. It is undesirable (in terms of both the amount of computation required and the accuracy that is achievable) to use enough parameters in the far echo emulator to span this quiet period, so nearly all prior art echo cancellers for SCQAM use a bulk delay, during which the data and/or the transmit signal is stored but is not expected to produce an echo. For the MCQAM echo canceller of the present invention this function is performed by the Serial Bulk Delay **520**, which delays the transmit signal by $T_{s1}$.

The block of encoded, complex data samples plus a few constant samples, which together are to be used to modulate the carriers, are input, as described previously, to the IFFT and Cyclic Prefix **500** and the F-D SC&U **530** and now also to the Block Bulk Delay **510**; the output of this delay is input to a second F-D SC&U **540**. Similarly, the samples of the transmit signal, which are output from the Parallel to Serial converter (P/S) **240**, are input to Serial Bulk Delay **520**, and the output of this delay is input to the Far Echo Emulator **550**, which, in the first embodiment of the invention, was implemented in the time domain, but might, as already discussed, alternatively be implemented in the frequency domain using overlap-save FFTs and IFFTs. The output of the emulator is then input to Phase Splitter **560**.

The Phase Splitter **560** and Multiplier **600** rotate the emulated echo by a continually changing phase angle if the echo has been subjected to a frequency offset. The output of the multiplier is subtracted from the modified received signal in Subtractor **610**.

The total delay of the transmitted signal through the serial bulk delay ($T_{s1}$) and phase splitter ($T_{ps}$) must be equal to $T_d$, the round-trip delay of the echo, so ideally

$$T_{s1} = T_d - T_{ps} \qquad (4)$$

[In practice, $T_{s1}$ is set slightly less than this in order to allow for any error in measuring $T_d$.]

The parameters of the Far Echo Emulator are then adapted in the same way as those of the Near Echo Emulator, using the second serial-to- parallel converter S/P **660**, FFT **650**, and F-D SC&U **540**.

In order, however, that the same block timing can be used for the input to the far echo F-D SC&U as for the transmit signal and the near echo F-D SC&U, it is necessary to delay by $T_{s2}$, in Serial Bulk Delay **670**, the input to the second serial-to parallel converter S/P **660** so that the total delay of both echo and emulated echo is an integer number of block periods. That is, $T_{s2}$ is defined by

$$T_d + T_{s2} = K(N+L)T \qquad (5)$$

Then, in order that blocks of the transmit signal be correlated with the appropriate blocks of the echoes, the Block Bulk Delay must be equal to K blocks (i.e., $T_b = K(N+L)T$).

Adaptation for Frequency Offset Compensation:

The F-D SC&U **540** continuously learns the complex frequency-domain parameters of the far echo, $\overline{Hf_n}$ which it passes to the Far-Echo Emulator **550**, and the algorithm dO **570**. This last unit calculates the change of the phase of each parameter and the average change over all $N_c$ parameters.

By comparing the smoothed parameters, $\underline{Hf_{i,n}}$, calculated after processing of the ith block with the previous set $\underline{Hf_{i-1,n}}$, set of smoothed changes can be defined by

$$\underline{dHf_{i,n}} = \underline{Hf_{i,n}} - \underline{Hf_{i-1,n}} \qquad (6)$$

Then the small angle by which each complex parameter has rotated is given aproximately by

$$d\phi_{i,n} = \text{Im}(\underline{Hf_{i,n}}.\underline{dHf_{i,n}})/|\underline{Hf_{i,n}}.\underline{Hf_{i-1,n}}|^2 \qquad (7)$$

where the * denotes the complex conjugate, and the small angle approximation that $dO/ \cong \arctan[d\phi]$ has been used.

The division in equation (7) is a tedious operation in most digital signal processors, so it is dispensed with. The result is that the contributions from each frequency sub-channel to the estimate of dO/ are weighted by the power received in that channel--a not unreasonable approximation.

An average phase change over all $N_c$ sub-channels is then calculated by

$$d\phi_i = \frac{1}{N_c} \sum_{n=n_1}^{n_2} d\phi_{i,n} \qquad (8)$$

This average phase change is input to a Low-Pass Filter **580**. A filter for a conventional Phase-Locked Loop (PLL), would, as is well understood in the art, have a transfer function

$$F(z) = \frac{\theta_i}{d\phi_i} = \frac{\delta \quad z[z - (1-\beta)]}{(z - 1)^2} \qquad (9)$$

where $\delta$ and $\beta$ are small quantities chosen for the best compromise between transient response and noise filtering. The input to this filter is however, a phase change, so the output is also; to calculate the average phase of the echo path another integration **620** must be added.

The angle $\theta_i$ that is calculated in this way is the average, across all frequency bands and across the period of a block, of the phases of all of the multicarrier echo path sub-channels; if there is frequency offset the actual phase of each of the sub-channels will, of course, change linearly with time across the period. Therefore the phase that is input to the rotator **600** for sample k (k = 1 to N+L) should have two components:

$$\theta_{i,k} = \theta_i + 2\text{TT}kf_{off,i} \qquad (10)$$

where $f_{off,i}$ is the estimate, after the ith block, of the frequency offset. This estimate is proportional to the filtered phase change, so equation (10) can be rewritten as

$$\theta_{i,k} = \theta_i + [k/(N+L)](\theta_i - \theta_{i-1}] \qquad (10a)$$

and implemented by multiplier **630** (with $\delta = k/(N+L)$) and summer **640**.

The angle $\theta_i$ is then used in **590** to generate the complex number $e^{j0} = \cos\theta + j\sin\theta$. A look-up table was used in the first embodiment, but various methods of calculation that are well-known in the art might alternatively be used. The complex number is then input to the multiplier **600** which generates just the real part of the emulated and rotated far echo.

## Initial Frequency-Domain Training

Ling and Long (loc. cit.) showed that if the round-trip delay $T_d$ is such that

$$(K'N - M_2)T <= T_d < (K'N + M_1)T \qquad (11)$$

where K' is any integer, then, because of the cyclic nature of the training signal (period = NT), near and far echoes will appear to overlap, and will not be completely separable.

Their solution to this problem was to adust the period of the training signal according to $T_d$. The algorithm for doing this was fairly complicated, and, because the resultant period did not necessarily contain a number of samples that was a power of two, the computationally-efficient fast algorithms could not be used for the transformations.

The solution to this problem that is incorporated into the present invention is to use a period for the training signal which (a) is equal to the block length used during data transmission, (b) comprises a number of samples that is an integer power of two, (c) is independent of the delay $T_d$, and (d) is longer than the longest $T_d$ encountered on terrestrial transmission links.

Calculation of Echo Path Impulse Responses:

The preferred cyclic transmit signal is a chirp sequence with a fixed period of 128 ms. The 512 complex samples (at 4000 samples/s) are modulated in sequence onto all 512 carriers at frequencies from 0 to 4.0 kHz using the IFFT **220**, and transmitted as described previously. The method of calculating the echo path response is slightly different for terrestrial and satellite links.

Terrestrial Links:

For connections that do not involve transmission via a satellite the delay of the last part of the far echo, $(T_d + M_2T)$, is less than the symbol period, NT (= 128 ms), of the preferred embodiment. Therefore the echo path response is calculated as follows.

(a) The transform of the received signal is divided by that of the transmitted chirp sequence. Since the samples of the chirp sequence are all of equal magnitude, which can be normalized to unity, division can be effected by multiplying by the complex conjugate of the transmitted sample.

(b) The dividend is IFFTed into the time domain, and the samples separated into two sets--those in the ranges of t = 0 to $M_1 T$ and from $T_d$ to $T_d + M_2 T$--and the rest are set to zero.

(c) The near echo response is averaged over several blocks, and loaded, as an initial setting for subsequent adaptation, into the F-D SC&U **530**.

(d) The far echo impulse response is derotated in accordance with the learned frequency offset, and a best estimate of the frequency- domain and time-domain parameters of the far echo is made after each block.

(e) The far echo response, calculated in this way, is averaged over several blocks, its delay is reduced by $T_d$--so that the echo appears to start at the beginning of a block--and the resultant frequency-domain and time-domain parameters are loaded into F-D SC&U **540** and Far Echo Emulator **550**.

(f) The parameter, K, of the Block Bulk Delay is set, as indicated by equation (5), to one.

(g) The estimate of frequency offset is updated with each block after the first.

Satellite Connections:

For these the round-trip delay is greater than 450 ms. Therefore at least three cycles of the chirp sequence are transmitted before the far echo arrives at the receiver; during that time the received signal **390** comprises only the near echo. The near echo path response can therefore be almost completely learned before the far echo arrives.

For the Kth cycle (the cycle during which the first part of the far echo will arrive) and all subsequent cycles of the initial training signal, the near and far echoes may appear to overlap, and the estimate of the near echo cannot be further improved. The parameters are therefore fixed at those learned from the first (k-1) cycles, and the emulated near echo subtracted from the received signal. This emulation and subtraction is performed in the time domain in the first embodiment using **320** and **380**, but it might alternatively be performed in the frequency domain. In either case, the time-domain difference signal, which is assumed to comprise only the far echo, is input to the far echo initialization algorithms, which are thereafter the same as for terrestrial connections.

## Claims

1. A method of cancelling the echoes of a signal transmitted via a two-wire line in a data modem comprising a multicarrier transmitter which transforms blocks of encoded frequency-domain samples into blocks of time-domain samples and a multicarrier receiver which performs the inverse operation, said transmitter and receiver being both connected to said two-wire line, which echoes are reflected back into said receiver by an imperfect match between the output impedance of said modem and the input impedance of said two-wire line, said method comprising the steps of:

   (a) forming a first estimate of the frequency-domain characteristics of the path traversed by said echo;

   (b) transforming said estimated frequency-domain characteristics of step (a) into the time-domain to form an estimate of the impulse response parameters of said echo path;

   (c) calculating the expected time-domain samples of the echo of said transmitted signal based upon said estimated impulse response parameters of step (b);

   (d) subtracting said expected echo signal of step (c) from the actual signal received from said two-wire line in order to calculate a modified received signal;

   (e) transforming a first block of time-domain samples of said modified received signal of step (d) into the frequency domain;

   (f) correlating said transformed modified received signal of step (e) with said encoded frequency-domain samples of said transmitted signal;

   (g) calculating a new set of estimated frequency-domain echo path characteristics by decreasing each of said first estimated frequency-domain characteristics by a small quantity that is proportional to said correlation of step (f); and

   (h) mproving the estimate of said frequency-domain characteristics by repeating steps (a) - (g) using subsequent samples of said transmitted and received signals.

2. The method of claim 1 in which said transformations from time domain to frequency domain are performed using a discrete Fourier transform, and said transformations from frequency domain into time domain are performed using an inverse discrete Fourier transform.

3. The method of claim 1 in which said transformations from time domain to frequency domain are performed using a fast Fourier transform, and said transformations from frequency domain to time domain are performed using an inverse fast Fourier transform.

4. The method of one of the preceding claims in which said estimates of the characteristics of the echo path comprise just one complex number for each of the carriers used in said transmitted signal.

5. The method of one of the preceding claims in which said encoded frequency-domain samples occupy a first frequency band, and are augmented by some other samples that are not used to convey data information, so that the composite set, which is transformed into said set of time-domain samples and is also correlated with said modified received signal, occupies a second frequency band that is wider than said first frequency band.

6. The method of claim 1 in which the number of parameters of said estimate of the impulse response of the echo path is less than the number of parameters of said estimate of the frequency-domain characteristics, and a smoothing of said frequency-domain parameters is effected by the steps of:

(i) changing said frequency-domain characteristics in order to generate a first set of new characteristics;

(j) transforming said first set of new characteristics into the time-domain, and truncating the time-domain impulse response in order to generate a new set of parameters of said estimated impulse response; and

(k) transforming said new, truncated estimated impulse response back into the frequency domain to generate a second set of new frequency-domain characteristics.

7. The method of claim 6, in which said transformations of steps (j) and (k) are performed using Inverse Fast Fourier Transforms and Fast Fourier Transforms, respectively.

8. A method of cancelling a far echo of a transmitted signal in a data modem comprising a multicarrier transmitter which transforms blocks of encoded frequency-domain samples into blocks of time-domain samples and a multicarrier receiver which performs the inverse operation, said transmitter and receiver being both connected to a communication link that comprises, in turn, a first two-wire line, one or more four-wire terrestrial carrier systems, and a second two-wire line which echo is reflected back to said receiver from said second two-wire line, and which may be offset in frequency, said method comprising the steps of:

(a) forming first estimates of the round-trip delay of said far echo, and of the frequency-domain characteristics and frequency offset of the path traversed by said far echo;

(b) transforming said estimated frequency-domain characteristics of step (a) into the time-domain to form an estimate of the impulse response parameters of said far echo path;

(c) calculating the expected time-domain samples of the echo of said transmitted signal based upon said estimated impulse response parameters of step (b);

(d) rotating said expected time-domain samples of step (c) by an angle that increases linearly with time in proportion to said estimate of the frequency offset;

(e) subtracting said rotated expected echo signal of step (d) from the actual signal received from said two-wire line in order to calculate a modified received signal;

(f) delaying said samples of said modified received signal of step (e) by a time that is equal to the difference between an integer number of periods of said blocks and said round-trip delay of step (a);

(g) transforming a first block of time-domain samples of said modified and delayed received signal of step (f) into the frequency domain;

(h) delaying said blocks of said encoded frequency-domain samples by a time that is an integer multiple of the period of said blocks;

(i) correlating said transformed modified received signal of step (g) with said encoded and delayed frequency-domain samples of step (h);

(j) calculatng a new set of estimated frequency-domain echo path characteristics by decreasing each of said characteristics by a small quantity that is proportional to said correlation of step (i);

(k) calculating a set of estimates of the phase angles by which each of said new frequency characteristics has rotated;

(l) averaging said changes of phase angles of step (k) over the set of said characteristics;

(m) filtering said average phase angle of step (l) to generate an improved estimate of the frequency offset of said far echo; and

(n) repeating steps (b) through (m) in order to continually improve said estimates of step (a).

9. A method of initially estimating the parameters of near and far echoes of a transmitted signal in a data modem comprising a multicarrier transmitter which transforms blcoks of encoded frequency-domain samples into blocks of time-domain samples and a multicarrier receiver which performs the inverse operation, said transmitter and receiver being both connected to a terrestrial communication link that comprises, in turn, said first two-wire line, one or more four-wire terrestrial carrier systems, and said second two-wire line, which echoes are reflected back into said receiver by said first and second two-wire lines respectively, said method comprising the steps of:

(a) repeatedly transmitting a cyclic signal that has a period that is equal to the duration of said sets of encoded frequency-domain samples, and longer than the delay of said far echo;

(b) transforming into the frequency domain sets of samples of the signals received via said echo paths;

(c) dividing said transform of said sets of samples of step (b) by the transform of said cyclic signal of step (a) to form a first estimate of the combined frequency-domain characteristics of both of said near and far echo paths;

(d) calculating the time-domain parameters of said near echo path by transforming said first estimate of step (c) into the time domain, and setting to zero all samples outside the span of said near echo;

(e) calculating a first set of time-domain parameters of said far echo by setting to zero all samples of said transformed first estimate of step (d) which are outside the span of said far echo;

(f) generating a second set of time-domain parameters of said far echo by rotating said first set of time-domain parameters of step (e) by the angles needed to compensate for the estimated frequency offset of said far echo path;

(g) transforming said second set of time-domain parameters of step (f) into the frequency domain; and

(h) for all sets of samples of said actual received signal after the first, averaging the change of phase angle of said frequency-domain parameters and thereby determining an update of the estimated frequency offset.

10. A method of initially estimating the parameters of near and far echoes of a transmitted signal in a data modem comprising a multicarrier transmitter which transforms blocks of encoded frequency-domain samples into blocks of time-domain samples and a multicarrier receiver which performs the inverse operation, said transmitter and receiver being both connected to a communication link that comprises, in turn, a first two-wire line, one or more four-wire carrier systems transmitted via an orbiting satellite, and a second two-wire line, which echoes are reflected back into said receiver by said first and second two-wire lines respectively, said method comprising the steps of:

(a) repeatedly transmitting a cyclic signal that has a period that is equal to the duration of said sets of encoded frequency-domain samples;

(b) transforming into the frequency domain those first sets of samples of the signals which are received via said near echo path before said far echo has arrived at the receiver of said modem;

(c) dividing the transform of said first sets of samples of step (b) by the transform of said cyclic signal to form a first estimate of the frequency-domain characteristics of said near echo path;

(d) calculating the time-domain parameters of said near echo path by transforming said first estimate of step (c) into the time domain, and setting to zero all samples outside the span of said near echo;

(e) calculating a smoothed set of frequency-domain parameters of said near echo path by transforming said time-domain parameters of step (d) into the frequency domain;

(f) averaging all sets of said time-domain and frequency-domain parameters of steps (d) and (e) respectively that are received before said far echo arrives at said receiver;

(g) calculating the time-domain samples of the estimated near echo using said averaged sets of parameters of step (f);

(h) generating a first set of samples of said far echo by subtracting said samples of step (g) from those samples of said actual received signal that are received after said far echo arrives at said receiver;

(i) generating a second set of time-domain samples of said far echo signal by rotating said first set of samples of step (h) by the angles needed to compensate for the estimated frequency offset of said far echo path;

(j) transforming said second set of samples of step (i) into the frequency domain; and

(k) for all sets of samples of said received signal that comprise both near and far echoes after the first, averaging the change of phase angle of said frequency-domain samples and thereby calculating an update of said estimated frequency offset.

11. A method of initially estimating the parameters of near and far echoes of a transmitted signal in a data modem comprising a multicarrier transmitter which transforms blocks of encoded frequency-domain samples into blocks of time-domain samples and a multicarrier receiver which performs the inverse operation, said transmitter and receiver being both connected to a communication link that comprises, in turn, a first two-wire line, one or more four-wire carrier systems transmitted via an orbiting satellite, and a second two-wire line, which echoes are reflected back into said receiver by said first and second two-wire lines respectively, said method comprising the steps of:

(a) repeatedly transmitting a cyclic signal that has a period that is equal to the duration of said sets of encoded frequency-domain samples;

(b) transforming into the frequency domain those first sets of samples of the signals which are received via said near echo path before said far echo has arrived at the receiver of said modem;

(c) dividing the transform of said first sets of samples of step (b) by the transform of said cyclic signal to form a first estimate of the frequency-domain characteristics of said near echo path;

(d) calculating the time-domain parameters of said near echo path by transforming said first estimate of step (c) into the time domain, and setting to zero all samples outside the span of said near echo;

(e) calculating a smoothed set of frequency-domain parameters of said near echo path by transforming said time-domain parameters of step (d) into the frequency domain;

(f) averaging all sets of said time-domain and frequency-domain parameters of steps (d) and (e) repectively that are received before said far echo arrives at said recever;

(g) calculating the frequency-domain paramters of the combined near and far echo paths by transforming into the frequency domain sets of those samples of said actual received signal that are received after said far echo arrives at said receiver;

(h) generating a first estimate of the frequency-domain paramters of said far echo path by subtracting from said frequency-domain parameters of said combined echo paths of step (g) said smoothed and averaged frequency-domain parameters of said near echo path of step (f);

(i) transforming said first estimate of step (h) into the time domain;

(j) generating a second set of time-domain parameters of said far echo signal by rotating said first set of parameters of step (i) by the angles needed to compensate for the estimated frequency offset of said far echo path;

(k) transforming said second set of parameters of step (h) into the frequency domain; and

(l) for all sets of samples of said received signal that comprise both near and far echoes after the first, averaging the change of phase angle of said frequency-domain parameters and thereby calculating an update of said estimated frequency offset.

12. Apparatus for cancelling the echoes of a signal transmitted via a two-wire line in a data modem comprising a multicarrier transmitter which transforms blocks of encoded frequency-domain samples into blocks of time-domain samples and a multicarrier receiver which performs the inverse operation, said transmitter and receiver being both connected to said two-wire line, which echoes are reflected back into said receiver by an imperfect match between the output impedance of said modem and the input impedance of said two-wire line, said apparatus comprising:

means for estimating the frequency-domain characteristics of the path traversed by said echo;

means for transforming said estimated frequency-domain characteristics into the time-domain to form an estimate of the impulse response of said echo path;

means for calculating the expected echo signal of said transmitted signal based upon said estimated impulse response;

means for subtracting said expected echo signal from the actual signal received from said two-wire line;

means for operating upon said actual received signal to form a modified received signal of which the echo component appears to be cyclic;

means for transforming the time samples of said modified received signal into the frequency domain;

means for correlating said transformed modified received signal with said encoded frequency-domain samples of said transmitted signal; and

means for changing said estimated frequency characteristics of said echo path in order to reduce said correlation.

13. The apparatus of claim 12 further comprising means for performing said transformations from time doamin to frequency domain using a discrete Fourier transform, and said transformations from frequency domain into time domain using an inverse discrete Fourier transform.

14. The apparatus of claim 12 further comprising means for performing said transformations from time domain to frequency domain using a fast Fourier transform, and said transformations from frequency domain into time domain using an inverse fast Fourier transform.

15. The apparatus of claim 12, further comprising means for augmenting said encoded frequency-domain samples by some other samples that are not used to convey data information, so that the composite set occupies a frequency band that is wider than that occupied by said encoded frequency-domain samples.

16. The apparatus of ome of claims 12 to 15 further comprising means for smoothing said frequency-domain parameters, said means comprising:

means for changing said frequency-domain characteristics in order to generate a first set of new characteristics;

means for transforming said first set of new characteristics into the time-domain, and truncating the time-domain impulse response in order to generate a new set of parameters of said estimated impulse response; and

means for transforming said new, truncated estimated impulse response back into the frequency domain to generate a second set of new frequency-domain characteristics.

17. The apparatus of claim 16, further comprising means for performing said transformations using Inverse Fast Fourier Transforms and Fast Fourier Transforms.

18. Apparatus for cancelling a far echo of a transmitted signal in a data modem comprising a multicarrier transmitter which transforms blocks of encoded frequency-domain samples into blocks of time-domain samples and a multicarrier receiver which performs the inverse operation, said transmitter and receiver being both connected to a communication link that comprises, in turn, a first two-wire line, one or more four-wire terrestrial carrier systems, and a second two-wire line, which far echo is reflected back to said receiver from said second two-wire line, and which may be offset in frequency, said apparatus comprising:

means for forming first estimates of the frequency-domain characteristics and the frequency offset of the path traversed by said far echo;

means for transforming said estimated frequency-domain characteristics into the time-domain to form an estimate of the impulse response parameters of said far echo path;

means for calculating the expected time-domain samples of the echo of said transmitted signal based upon said estimated impulse response parameters;

means for rotating said expected time-domain samples of by an angle that increased linearly with time in proportion to said estimate of the frequency offset;

means for subtracting said rotated expected echo signal of from the actual signal received from said two-wire line in order to calculate a modified received signal;

means for transforming a first block of time-domain samples of said modified received signal into the frequency domain;

means for correlating said transformed modified received signal with said encoded frequency-domain samples of said transmitted signal;

means for calculating a new set of estimated frequency-domain echo path characteristics by decreasing each of said characteristics by a small quantity that is proportional to said correlation;

means for calculating a set of estimates of the phase angles by which each of said new frequency characteristics has rotated;

means for averaging said changes of phase angles over the set of said characteristics; and

means for filtering said average phase angle to generate an improved estimate of the frequency offset of said far echo.

19. Apparatus for initially estimating the parameters of near and far echoes of a transmitted signal in a data modem comprising a multicarrier transmitter which transforms blocks of encoded frequency-domain samples into blocks of time-domain samples and a multicarrier receiver which performs the inverse operation, said transmitter and receiver being both connected to a terrestrial communication link that comprises, in turn, a first two-wire line, one or more four-wire terrestrial carrier systems, and second two-wire line, which near and far echoes are reflected back into said receiver by said first and second two-wire lines respectively, said apparatus comprising:

means for repeatedly transmitting a cyclic signal that has a period that is equal to the duration of said sets of encoded frequency-domain samples, and longer than the delay of said far echo;

means for transforming into the frequency domain sets of samples of the signals received via said echo paths;

means for dividing said transform of said sets of samples by the transform of said cyclic signal to form a first estimate of the combined frequency-domain characteristics of both of said near and far echo paths;

means for calculating the time-domain parameters of said near echo path by transforming said first estimate into the time domain, and setting to zero all samples outside the span of said near echo;

means for calculating a first set of time-domain parameters of said far echo by setting to zero all samples of said transformed first estimate which are outside the span of said far echo;

means for generating a second set of time-domain parameters of said far echo by rotating said first set of time-domain parameters by the angles needed to compensate for the estimated frequency offset of said far echo path;

means for transforming said second set of time-domain parameters into the frequency domain; and

means for averaging, for all sets of samples of said actual received signal after the first, the change of phase angle of said frequency-domain parameters and thereby calculating an update of the estimated frequency offset.

**20.** Apparatus for initially estimating the parameters of near and far echoes of a transmitted signal in a data modem comprising a multicarrier transmitter which transformsblocks of encoded frequency-domain samples into blocks of time-domain samples and a multicarrier receiver which performs the inverse operation, said transmitter and receiver being both connected to a communication link that comprises, in turn, a first two-wire line, one or more four-wire carrier systems transmitted viy an orbiting satellite, and a second two-wire line, which echoes are reflected back into said receiver by said first and second two-wire lines respectively, said apparatus comprising:

means for repeatedly transmitting a cyclic signal which has a period that is equal to the duration of said sets of encoded frequency-domain samples;

means for transforming into the frequency domain those first sets of samples of the signals which are received via said near echo path before said far echo has arrived at the receiver of said first modem;

means for dividing the transform of said first sets of samples by the transform of said cyclic signal to form a first estimate of the frequency-domain characteristics of said near echo path;

means for calculating the time-domain parameters of said near echo path by transforming said first estimate into the time domain, and setting to zero all samples outside the span of said near echo;

means for calculating a smoothed set of frequency-domain parameters of said near echo path by transforming said time-domain parameters into the frequency domain;

means for averaging all sets of said time-domain and frequency-domain parameters respectively that are received before said far echo arrives at said receiver;

means for calculating the time-domain samples of the estimated echo using said averaged sets of parameters;

means for subtracting said time-domain samples from those samples of said actual received signal that are received after said far echo arrives at said receiver;

means for generating a second set of time-domain samples of said far echo signal by rotating said first set of samples by the angles needed to compensate for the estimated frequency offset of said far echo path;

means for transforming said second set of samples into the frequency domain; and

means for averaging, for all sets of samples of said received signal that comprise both near and far echoes after the first, the change of phase angle of said frequency-domain parameters and thereby calculating an update of the estimated frequency offset.

**21.** Apparatus for initially estimating the parameters of near and far echoes of a transmitted signal in a data modem comprising a multicarrier transmitter which transforms blocks of encoded frequency-domain samples into blocks of time-domain samples and a multicarrier receiver which performs the inverse operation, said transmitter and receiver being both connected to a communication link that comprises, in turn, a first two-wire line, one or more four-wire carrier systems transmitted via an orbiting satellite, and a second two-wire line, which echoes are reflected back into said receiver by said first and second two-wire lines repectively, said apparatus comprising:

means for repeatedly transmitting a cyclic signal which has a period that is equal to the duration of said sets of encoded frequency-domain samples;

means for transforming into the frequency domain those first sets of samples of the signals which are received via said near echo path before said far echo has arrived at the receiver of said first modem;

means for dividing the transform of said first sets of samples by the transform of said cyclic signal to form a first estimate of the frequency-domain characteristics of said near echo path;

means for calculating the time-domain parameters of said near echo path by transforming said first estimate into the time domain, and setting to zero all samples outside the span of said near echo;

means for calculating a smoothed set of frequency-domain parameters of said near echo path by transforming said time-domain parameters into the frequency domain;

means for averaging all sets of said time-domain and frequency-domain parameters respectively that are received before said far echo arrives at said receiver,

means for calculating the frequency-domain parameters of the combined near and far echo paths by transforming into the frequency domain sets of those samples of said actual received signal that are received after said far echo arrives at said receiver;

means for generating a first estimate of the frequency-domain parameters of said far echo path by subtracting from said frequency-domain parameters of said combined echo paths said smoothed and averaged frequency-domain parameters of said near echo path;

means for transforming said first estimate into the time domain;

means for generating a second set of time-domain parameters of said far echo signal by rotating said first set of parameters by the angles needed to compensate for the estimated frequency offset of said far echo path;

means for transforming said second set of parameters into the frequency domain, and

means for averaging, for all sets of samples of said received signal that comprise both near and far echoes after the first, the change of phase angle of said frequency-domain parameters and thereby calculating an update of the estimated frequency offset.

FIGURE 1 (PRIOR ART)

FIGURE 2(a)

FIGURE 2(b)

FIGURE 3

18

FIGURE 4

FIGURE 5

EP 0 498 369 A2